# EUROPÄISCHE PATENTANMELDUNG

(11) **EP 2 597 939 A2**
(43) Veröffentlichungstag der Anmeldung: **29.05.2013**
(21) Anmeldenummer: 12188440.7
(22) Anmeldetag: 12.10.2012
(51) Int. Cl.: H05H 1/34

(54) **Plasmabrenner**

(30) Priorität: 28.11.2011 DE 202011052130 U
(71) Anmelder: Sato Schneidsysteme Anton Hubert e.K., 41169 Möchengladbach (DE)
(72) Erfinder: Hubert, Anton W., Mönchengladbach 41179 (DE)
(74) Vertreter: Albrecht, Dirk

(57) **Zusammenfassung**

Die Erfindung betrifft einen Plasmabrenner mit einem Brennerkörper (1), der eine Elektrode und eine Düse (2) trägt, welcher dadurch gekennzeichnet ist, dass eine Schallschutzvorrichtung (3) vorgesehen ist, wobei die Schallschutzvorrichtung (3) umfasst
- einen Schallschutzkörper (4), welcher den Brennerkörper (1) unter Bildung eines ringartigen Schallraums (S) umgibt, sich bis zum werkstückseitigen Endbereich des Brennerkörpers (1) erstreckt und werkstückseitig offen ausgebildet ist,
- wenigstens einen Schallaufnehmer (5) zur Aufnahme von infolge eines Plasmabrennvorgangs erzeugtem Störschall,
- wenigstens eine Schallwiedergabeeinrichtung (6), die in den Schallraum (S) gerichtet und ausgebildet ist, um Schall in den Schallraum (S) abzustrahlen,
- eine Steuereinrichtung (7), die mit dem Schallaufnehmer (5) und der Schallwiedergabeeinrichtung (6) verbunden ist und die Schallwiedergabeeinrichtung (6) in Abhängigkeit des von dem Schallaufnehmer (5) aufgenommenen Störschalls derart steuert, dass zur Geräuschminderung durch destruktive Interferenz von der Schallwiedergabeeinrichtung (6) Antischall abgestrahlt wird.

## Beschreibung

Die Erfindung betrifft einen Plasmabrenner mit einem Brennerkörper, der eine Elektrode und eine Düse trägt.

Plasmabrenner dieser Art sind beispielsweise aus der DE 20 2004 021 663 U1 bekannt und werden im Allgemeinen verwendet, um elektrisch leitfähige Werkstücke zu schneiden und zu bearbeiten. Dafür wird der Plasmabrenner in die unmittelbare Umgebung des Werkstückes, das beispielsweise ein Metallblech sein kann, gebracht und zwischen der Elektrode und der Düse des Plasmabrenners ein Lichtbogen gezündet. Durch diesen wird ein Arbeitsgas ionisiert, und der erhaltene Plasmastrahl wird eingesetzt, um das Werkstück lokal zu schmelzen und so eine Schnittfuge zu erzeugen.

An derartigen Plasmabrennern wird als nachteilig empfunden, dass mit dem Plasmabrennvorgang eine erhebliche Geräuschentwicklung einhergeht. Dies stellt insbesondere für Personen, welche sich in unmittelbarer Umgebung des Plasmabrenners befinden, beispielsweise um diesen zu bedienen, eine Belästigung dar und kann zu Gesundheitsschäden führen.

Ausgehend von diesem Stand der Technik ist eine Aufgabe der vorliegenden Erfindung, einen Plasmabrenner vorzugeben, der komfortabel sowie gefahrenfrei betrieben werden kann. Diese Aufgabe wird bei einem Plasmabrenner der eingangs genannten Art dadurch gelöst, dass eine Schallschutzvorrichtung vorgesehen ist, wobei die Schallschutzvorrichtung umfasst
- einen Schallschutzkörper, welcher den Brennerkörper unter Bildung eines ringartigen Schallraums umgibt, sich bis zum werkstückseitigen Endbereich des Brennerkörpers erstreckt und werkstückseitig offen ausgebildet ist,
- wenigstens einen Schallaufnehmer zur Aufnahme von infolge eines Plasmabrennvorgangs erzeugtem Störschall,
- wenigstens eine Schallwiedergabeeinrichtung, die in den Schallraum gerichtet und ausgebildet ist, um Schall in den Schallraum abzustrahlen,
- eine Steuereinrichtung, die mit dem Schallaufnehmer und der Schallwiedergabeeinrichtung verbunden ist und die Schallwiedergabeeinrichtung in Abhängigkeit des von dem Schallaufnehmer aufgenommenen Störschalls derart steuert, dass zur Geräuschminderung durch destruktive Interferenz von der Schallwiedergabeeinrichtung Antischall abgestrahlt wird.

Der Erfindung liegt demzufolge die Idee zugrunde, Störschall, der während des Betriebs eines Plasmabrenners erzeugt wird, gezielt zu reduzieren. Dies wird erfindungsgemäß durch eine Schallschutzvorrichtung erreicht, mit der eine aktive Geräuschminderung durch Abstrahlung von Antischall erfolgt. Dazu umfasst die Schallschutzvorrichtung einen Schallschutzkörper, der den Brennerkörper des Plasmabrenners unter Bildung eines ringartigen Schallraums umgibt. Der infolge eines Plasmabrennvorgangs erzeugte Störschall wird mittels eines Schallaufnehmers, beispielsweise eines Mikrophons, aufgezeichnet. Der Schallaufnehmer ist zweckmäßiger Weise an der Innenseite und insbesondere am werkstückseitigen Endbereich des Schallschutzkörpers vorgesehen, so dass er zu dem Entstehungsort des Störschalls - der Bearbeitungsstelle des Plasmabrenners an dem Werkstück - hin ausgerichtet ist und sich in direkter Umgebung zu diesem befindet. Die Steuervorrichtung erfasst ein Messsignal, welches zu dem von dem Schallaufnehmer aufgezeichneten Störschall korrespondiert, und dieses wird um 180° phasenverschoben. Mit dem erhaltenen invertierten Signal steuert die Steuereinrichtung die Schallwiedergabeeinrichtung, die beispielsweise einen Lautsprecher umfasst, an, so dass diese Antischall in den Schallraum abstrahlt. Infolge dessen tritt destruktive Interferenz auf, und der im Rahmen des Plasmabrennvorgangs erzeugte Störschall wird gedämpft bzw. ausgelöscht. Der Frequenzbereich, in welchem von der Schallwiederabgabeeinheit Antischall abgestrahlt werden kann erstreckt sich beispielsweise von 1800 bis 20000 Hz.

Mit der erfindungsgemäß vorgesehenen Schallschutzvorrichtung kann eine Lautstärkereduktion von bis zu 10 dB erzielt werden, was in etwa einer Halbierung der subjektiv vom Menschen wahrgenommenen Lautstärke entspricht. Dadurch wird der Komfort von Personen, welche sich in unmittelbarer Umgebung des Plasmabrenners befinden, beispielsweise, um diesen zu bedienen, erhöht und das Risiko möglicher Hörschäden deutlich vermindert.

Bei einem Ausführungsbeispiel der vorliegenden Erfindung ist vorgesehen, dass der Schallschutzkörper im Wesentlichen als Rotationskörper ausgebildet ist, dessen Rotationsachse entlang einer Längsachse des Brenners verläuft. Es versteht sich, dass der Schallschutzkörper auch in Form eines beliebigen nicht-rotationssymmetrischen Körpers ausgebildet sein kann.

Zweckmäßiger Weise nimmt die Querschnittsfläche des Schallschutzkörpers zum werkstückseitigen Endbereich des Brennerkörpers hin zu, wobei der Schallschutzkörper beispielsweise horn- oder glockenförmig ausgebildet sein kann. Diese Ausbildungsformen sind besonders geeignet, um eine gerichtete Ausbreitung des Antischalls zu ermöglichen.

Die Schallwiedergabeeinrichtung kann an dem der Werkstückseite gegenüberliegenden Endbereich des Schallschutzkörpers vorgesehen sein. Bei einer horn- oder glockenförmigen Ausbildung des Schallschutzkörpers ist dann die Schallwiedergabeeinrichtung, die insbesondere einen Horntreiber umfassen kann, an dem Endbereich des Schallschutzkörpers vorgesehen sein, der die geringste Querschnittsfläche aufweist.

In einem weiteren Ausführungsbeispiel der Erfindung ist vorgesehen, dass der Schallschutzkörper mit dem werkstückseitigen Ende der Düse abschließt, wodurch eine effiziente Geräuschminderung gewährleistet wird.

Eine weitere Ausführungsform der vorliegenden Erfindung zeichnet sich dadurch aus, dass mehrere Schallaufnehmer vorgesehen und mit der Steuereinrichtung verbunden sind. In diesem Fall erfasst die Steuereinrichtung die von den Schallaufnehmern erhaltenen und zu dem aufgenommenen Störschall korrespondierenden Messsignale, verstärkt diese einzeln und addiert die verstärkten Einzelsignale zu einem Gesamtsignal. Anschließend wird das Gesamtsignal von der Steuereinrichtung um 180° phasenverschoben und die Schallwiedergabeeinrichtung wird mit dem invertierten Gesamtsignal als Eingangssignal angesteuert, so dass diese Antischall abstrahlt. Das invertierte Gesamtsignal kann dabei nochmals verstärkt werden, bevor es an die Schallwiedergabeeinrichtung übergeben wird. Die Verwendung mehrerer Schallaufnehmer und Bildung der Summe aus den von diesen erfassten Einzelsignalen ermöglicht dabei, den Störschall an verschiedenen Stellen innerhalb des Schallschutzkörpers zu erfassen und mehrere Messsignale in die Ermittlung des korrespondierenden Antischallsignales einfließen zu lassen. Bei der Verwendung mehrerer Schallaufnehmer ist es zweckmäßig, wenigstens einen der Schallaufnehmer zur Kontrolle des Signales heranzuziehen, welches dem Störschall mit dem überlagerten Antischallsignal entspricht. Erfolgt eine derartige Kontrolle kontinuierlich oder in geringen Zeitabständen, so kann eine zeitliche Variation des Störschalls berücksichtigt und mittels angepasstem Antischall gedämpft werden.

Die Steuervorrichtung kann ferner ausgebildet sein, um analoge Messsignale von den Schallaufnehmern zu erfassen und in analoger Form weiterzuverarbeiten, insbesondere in analoger Form zu addieren und zu invertieren. Die Verwendung analoger Messsignale und insbesondere die Weiterverarbeitung dieser in analoger Form ermöglicht eine geringe Verarbeitungszeit der Messsignale. So kann mit guter Reaktionszeit auf eine zeitliche Veränderung des Störschalls durch Anpassung des Antischalls reagiert werden kann. Ferner kann insbesondere nach der Addition und Invertierung in analoger Form das erhaltene Signal in einem Analog-Digital-Umsetzer digitalisiert und anschließend mittels eines Digitalen Signalprozessors (DSP) in an sich bekannter Weise weiterverarbeitet, insbesondere weiter verstärkt werden, bevor es als Eingangssignal an die Schallwiedergabeeinrichtung übergeben wird. so dass diese Antischall in den Schallraum abstrahlt.

Der von dem Schallaufnehmer bzw. den Schallaufnehmern aufgenommene Störschall kann zweckmäßiger Weise in an sich bekannter Weise bezüglich seiner Spektralkomponenten analysiert werden. Die Analyse ermöglicht beispielsweise, gezielt Spektralkomponenten, die als besonders störend empfunden werden, mittels des korrespondierenden Antischalls dämpfen bzw. auslöschen zu können.

In weiterer Ausgestaltung der Erfindung ist vorgesehen, dass eine Kühleinrichtung zur Kühlung der Schallschutzvorrichtung, insbesondere des Schallschutzkörpers vorgesehen ist. Durch Verwendung einer geeigneten Kühlvorrichtung wird dem Umstand Rechnung getragen, dass die Komponenten des erfindungsgemäßen Plasmabrenners im Betrieb eine starke Erwärmung erfahren. Die Kühlung kann beispielsweise unter Verwendung von Luft erfolgen, wobei ein Luftstrom über die Schallschutzvorrichtung, insbesondere den Schallschutzkörper geführt wird, um einen effizienten Abtransport der im Rahmen des Bearbeitungsprozesses auftretenden Wärme zu gewährleisten. Auf diesem Wege wird einer Beschädigung der erfindungsgemäßen Schallschutzvorrichtung durch eine zu hohe Erwärmung vorgebeugt.

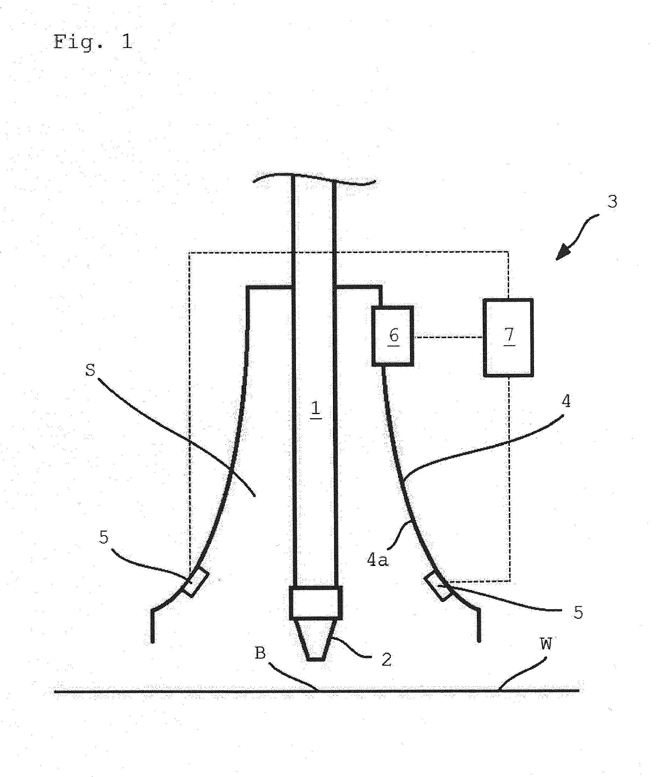

Hinsichtlich weiterer vorteilhafter Ausgestaltungen und Weiterbildungen der Erfindung wird auf die Unteransprüche sowie nachfolgende Beschreibung eines Ausführungsbeispiels unter Bezugnahme auf die beiliegende Zeichnung verwiesen. In der Zeichnung zeigt die einzige Figur einen Plasmabrenner gemäß der Erfindung in schematischer Darstellung.

Der Plasmabrenner umfasst einen lanzenförmig ausgebildeten Brennerkörper 1, von dem in der Figur der einem zu bearbeitenden Werkstück W zugewandte untere Endbereich dargestellt ist. Der Brennerkörper 1 trägt werkstückseitig eine Düse 2 sowie eine nicht eingezeichnete Elektrode. Die Spannungsversorgungseinrichtung des Plasmabrenners ist in der Figur nicht dargestellt.

Erfindungsgemäß ist eine Schallschutzvorrichtung 3 vorgesehen, die einen hier hornförmig ausgebildeten Schallschutzkörper 4 umfasst, welcher den Brennerkörper 1 des Plasmabrenners unter Bildung eines ringartigen Schallraums S umgibt. Der Schallschutzkörper ist nach unten hin offen ausgebildet und erstreckt sich bis zum unteren Endbereich des Brennerkörpers 1.

Die Schallschutzvorrichtung 3 umfasst ferner zwei Schallaufnehmer 5 - hier Mikrophone - zur Aufnahme von infolge eines Brennvorgangs erzeugtem Störschall. Diese sind einander gegenüberliegend an der Innenseite 4a des Schallschutzkörpers 4 an dessen unterem Endbereich vorgesehen, so dass sie zu dem Entstehungsort des Störschalls - der Bearbeitungsstelle B des Plasmabrenners an dem Werkstück W - hin ausgerichtet sind und sich in direkter Umgebung zu diesem befinden.

An dem der Werkstückseite gegenüberliegenden Endbereich des Schallschutzkörpers 4 ist eine in den Schallraum S ausgerichtete Schallwiedergabeeinrichtung 6 vorgesehen, um Schall in den Schallraum S abzustrahlen. In dem dargestellten Ausführungsbeispiel umfasst die Schallwiedergabeeinrichtung 6 einen Horntreiber. Die Schallwiedergabeeinrichtung 6 ist an der Stelle des Schallschutzkörpers 4 vorgesehen, an welcher dieser die geringste Querschnittsfläche aufweist, so dass in an sich bekannter Weise eine gerichtete Ausbreitung des von der Schallwiedergabeeinrichtung 6 abgestrahlten Schalls in dem hornförmig ausgebildeten Schallschutzkörper 4 erfolgt.

Darüber hinaus umfasst die Schallschutzvorrichtung 3 eine Steuereinrichtung 7, die mit den beiden Schallaufnehmern 5 und der Schallwiedergabeeinrichtung 6 verbunden ist. Die Steuereinrichtung 7 ist hier ausgebildet, um analoge Messsignale von den Schallaufnehmern 5 zu erfassen und in analoger Form weiterzuverarbeiten, hier zu addieren und zu invertieren. Sie umfasst ferner einen Analog-Digital-Umsetzer sowie einen Digitalen Signalprozessor (DSP), die nicht eingezeichnet sind. Die Steuereinrichtung 7 steuert die Schallwiedergabeeinrichtung 6 in Abhängigkeit des von den Schallaufnehmern 5 aufgenommenen Störschalls derart, dass zur Geräuschminderung durch destruktive Interferenz von der Schallwiedergabeeinrichtung 6 Antischall abgestrahlt wird.

Konkret erfasst die Steuereinrichtung 7 von den Schallaufnehmern 5 erhaltene, zu dem aufgenommenen Störschall korrespondierende Messsignale und verstärkt diese einzeln in analoger Form. Sie addiert die verstärkten Einzelsignale zu einem Gesamtsignal und phasenverschiebt das Gesamtsignal um 180°. Das erhaltene analoge invertierte Gesamtsignal wird in dem Analog-Digital-Umsetzer digitalisiert und anschließend in dem Digitalen Signalprozessor (DSP) in an sich bekannter Weise weiterverarbeitet, insbesondere weiter verstärkt. Das auf diesem Wege erhaltene digitale Gesamtsignal wird von der Steuereinrichtung 7 als Eingangssignal an die Schallwiedergabeeinrichtung 6 übergeben, sodass diese Antischall abstrahlt.

Darüber hinaus ist eine nicht eingezeichnete Kühleinrichtung zur Kühlung der Schallschutzvorrichtung 3 vorgesehen. Mittels dieser wird ein Luftstrom erzeugt und zum Abtransport von Wärme über die Schallschutzvorrichtung 3, insbesondere den Schallschutzkörper 4 geführt.

Im Betrieb wird mit Hilfe des Plasmabrenners eine Schnittfuge in das Werkstück W eingebracht, wobei infolge des Plasmabrennvorgangs in erheblichem Maße Störschall erzeugt wird. Der Störschall wird von den beiden Schallaufnehmern 5 aufgenommen, wobei die Steuereinrichtung 7 die zu dem aufgenommenen Störschall korrespondierenden Messsignale erfasst. Die Messsignale werden von der Steuereinrichtung 7 zunächst einzeln verstärkt und die verstärkten Einzelsignale werden zu einem Gesamtsignal addiert. Im Anschluss wird das erhaltene Gesamtsignal um 180° phasenverschoben, so dass ein invertiertes Gesamtsignal erhalten wird. Die Erfassung und Weiterverarbeitung der Messsignale erfolgt zunächst in analoger Form. In dem Analog-Digital-Umsetzer der Steuereinrichtung 7 wird das Signal anschließend digitalisiert und in dem Digitalen Signalprozessor (DSP) in an sich bekannter Weise weiterverarbeitet, insbesondere weiter verstärkt. Die Steuereinrichtung 7 steuert mit dem erhaltenen digitalen invertierten Gesamtsignal als Eingangssignal die Schallwiedergabeeinrichtung 6 an, so dass diese Antischall abstrahlt. Infolge dessen tritt destruktive Interferenz auf, und der im Rahmen des Plasmabrennvorgangs erzeugte Störschall wird gedämmt bzw. ausgelöscht.

Auf diesem Wege wird mit der erfindungsgemäß vorgesehenen Schallschutzvorrichtung 3 eine Lautstärkereduktion von etwa 10 dB erzielt, was in etwa einer Halbierung der subjektiv vom Menschen wahrgenommenen Lautstärke entspricht. Der Komfort von unmittelbar in der Umgebung des Plasmabrenners befindlichen Personen, die diesen beispielsweise bedienen, wird auf diesem Wege deutlich erhöht und das Risiko, dass diese Hörschäden erleiden, wird in erheblichem Maße vermindert.

## Patentansprüche

1. Plasmabrenner mit einem Brennerkörper (1), der eine Elektrode und eine Düse (2) trägt, **dadurch gekennzeichnet, dass** eine Schallschutzvorrichtung (3) vorgesehen ist, wobei die Schallschutzvorrichtung (3) umfasst
- einen Schallschutzkörper (4), welcher den Brennerkörper (1) unter Bildung eines ringartigen Schallraums (S) umgibt, sich bis zum werkstückseitigen Endbereich des Brennerkörpers (1) erstreckt und werkstückseitig offen ausgebildet ist,
- wenigstens einen Schallaufnehmer (5) zur Aufnahme von infolge eines Plasmabrennvorgangs erzeugtem Störschall,
- wenigstens eine Schallwiedergabeeinrichtung (6), die in den Schallraum (S) gerichtet und ausgebildet ist, um Schall in den Schallraum (S) abzustrahlen,
- eine Steuereinrichtung (7), die mit dem Schallaufnehmer (5) und der Schallwiedergabeeinrichtung (6) verbunden ist und die Schallwiedergabeeinrichtung (6) in Abhängigkeit des von dem Schallaufnehmer (5) aufgenommenen Störschalls derart steuert, dass zur Geräuschminderung durch destruktive Interferenz von der Schallwiedergabeeinrichtung (6) Antischall abgestrahlt wird.

2. Plasmabrenner nach Anspruch 1, **dadurch gekennzeichnet, dass** der Schallschutzkörper (4) im Wesentlichen als Rotationskörper ausgebildet ist, dessen Rotationsachse entlang einer Längsachse des Brennerkörpers (1) verläuft.

3. Plasmabrenner nach Anspruch 1 oder 2, **dadurch gekennzeichnet, dass** die Querschnittsfläche des Schallschutzkörpers (4) zum werkstückseitigen Endbereich des Brennerkörpers (1) hin zunimmt.

4. Plasmabrenner nach Anspruch 3, **dadurch gekennzeichnet, dass** der Schallschutzkörper (4) horn- oder glockenförmig ausgebildet ist.

5. Plasmabrenner nach einem der vorhergehenden Ansprüche, **dadurch gekennzeichnet, dass** der Schallschutzkörper (4) mit dem werkstückseitigen Ende der Düse (2) abschließt.

6. Plasmabrenner nach einem der vorhergehenden Ansprüche, **dadurch gekennzeichnet, dass** der wenigstens eine Schallaufnehmer (5) an der Innenseite (4a) und insbesondere am werkstückseitigen Endbereich des Schallschutzkörpers (4) vorgesehen ist.

7. Plasmabrenner nach einem der vorhergehenden Ansprüche, **dadurch gekennzeichnet, dass** mehrere Schallaufnehmer (5) vorgesehen und mit der Steuereinrichtung (7) verbunden sind.

8. Plasmabrenner nach Anspruch 7, **dadurch gekennzeichnet, dass** die Steuereinrichtung (7) von den Schallaufnehmern (5) erhaltene zu dem aufgenommenen Störschall korrespondierende Messsignale erfasst und einzeln verstärkt, die verstärkten Einzelsignale zu einem Gesamtsignal addiert, das Gesamtsignal um 180° Grad phasenverschiebt und die Schallwiedergabeeinrichtung (6) steuert, indem sie das so erhaltene invertierte Gesamtsignal als Eingangssignal an die Schallwiedergabeeinrichtung (6) übergibt, so dass diese Antischall abstrahlt.

9. Plasmabrenner nach einem der vorhergehenden Ansprüche, **dadurch gekennzeichnet, dass** die Steuereinrichtung (7) ausgebildet ist, um analoge Messsignale von den Schallaufnehmern (5) zu erfassen und in analoger Form weiterzuverarbeiten, insbesondere in analoger Form zu addieren und zu invertieren.

10. Plasmabrenner nach einem der vorhergehenden Ansprüche, **dadurch gekennzeichnet, dass** die Schallwiedergabeeinrichtung (6) an dem der Werkstückseite gegenüberliegenden Endbereich des Schallschutzkörpers (4) vorgesehen ist.

11. Plasmabrenner nach Anspruch 10, **dadurch gekennzeichnet, dass** die Schallwiedergabeeinrichtung (6) einen Horntreiber umfasst.

12. Plasmabrenner nach einem der vorhergehenden Ansprüche, **dadurch gekennzeichnet, dass** eine Kühleinrichtung zur Kühlung der Schallschutzvorrichtung (3), insbesondere des Schallschutzkörpers (4) vorgesehen ist.
